# EUROPEAN PATENT SPECIFICATION

(11) **EP 1 437 017 B1**
(45) Date of publication and mention of the grant of the patent: **10.12.2008**
(21) Application number: 02758501.7
(22) Date of filing: 13.09.2002
(51) Int. Cl.: H04Q 7/22

(54) **METHOD AND APPARATUS FOR PROCESSING MESSAGES**
VERFAHREN UND VORRICHTUNG ZUR VERARBEITUNG VON NACHRICHTEN
PROCEDE ET APPAREIL DE TRAITEMENT DE MESSAGES

(30) Priority: 14.09.2001 FI 20011813
(43) Date of publication of application: 14.07.2004
(73) Proprietor: Airwide Solutions OY, 02240 Espoo (FI)
(72) Inventor: KOPONEN, Juha, FIN-00350 Helsinki (FI); IKONEN, Teemu, FIN-02760 Espoo (FI); JÄÄLINOJA, Harri c/o Tuula & Heikki Jäälinoja, FIN-76850 Naarajärvi (FI)
(74) Representative: Kalliola, Sanna Marketta
(86) International application number: PCT/FI2002/000733
(87) International publication number: WO 2003/026331

(56) References cited:
- EP-A2- 1 189 464
- WO-A1-01/39577
- US-A- 5 822 700

## Description

The invention concerns controlling, filtering and directing SMS- (short message service) and corresponding messages. In particular the invention concerns processing the messages in a user-specific way.

The SMS is a service for sending messages. These messages have only limited size, which is up to 160 characters in point-to-point-type connections and at most 93 characters in broadcasting-type connections. One character is an ASCII-format character that includes 7 bits. The SMS-messages can be transmitted between digital devices operating in various cellular radio networks such as GSM (Global System for Mobile Telecommunications), PCS (Personal Communications Service) and PCN (Personal Communications Network).

The SMS can be used to transmit many kinds of data. Typical examples are text, logos and ringing tones. An SMS-message can be a picture or even a moving picture. Also OTA (over the air) applications can be sent over SMS, and WAP (Wireless Application Protocol) data can be browsed by SMS. Due to the limited size of the messages, some systems use several messages to transmit a single entity, for example an email, to the mobile device.

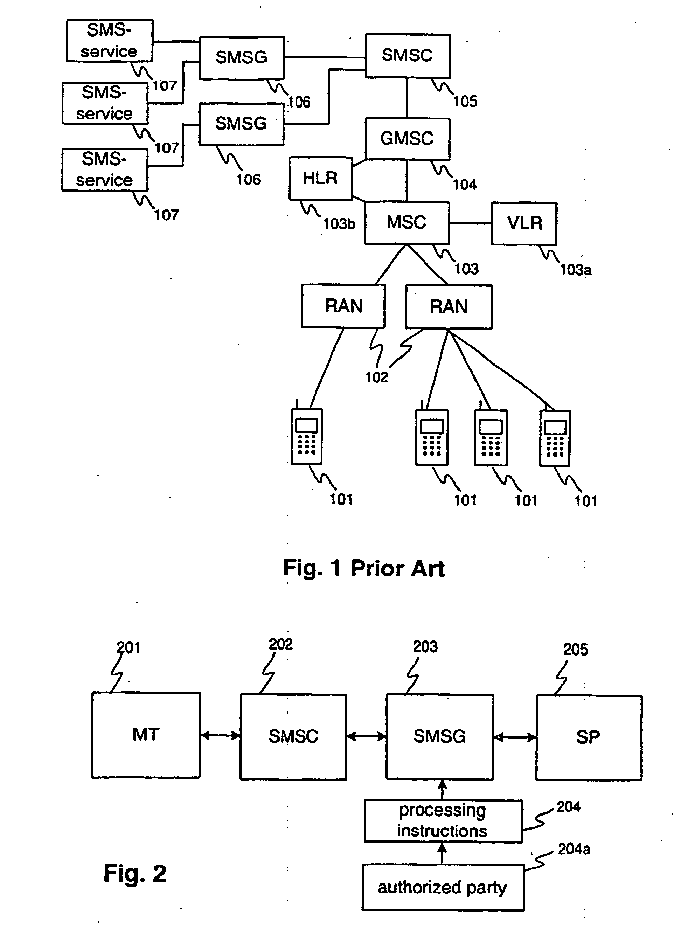

A route of an SMS-message is described referring to the figure 1. There are mobile stations (MS) 101 under base stations (BS) that belong to certain radio access networks (RAN) 102. When a mobile station 101 wants to send an SMS-message, the message is transmitted through the radio access network (RAN) 102 to a mobile switching centre (MSC) 103. The mobile switching centre (MSC) 103 is coupled to a visitor location register (VLR) 103a that knows which mobile stations are on its coverage area at the moment. There is also a home location register (HLR) 103b, which holds the present location information of mobile stations on the area of several mobile switching centres. From the mobile switching centre (MSC) 103 the message is transmitted through a gateway mobile switching centre (GMSC) 104 to an SMS centre 105 (SMSC). If the receiving device of the message is under some other mobile switching centre (MSC) according to the location information of the HLR, the route of the message is directed through that other MSC and gateway to another SMS centre. So all sent messages originated from MS 101 end up in some SMS centre 105, which transmits them further or may hold them for a predetermined time, if the receiving device cannot be reached at the moment.

The MS 101 informs the network about its own availability to accept messages. The SMS centre 105 starts a message transmission based on this information. First message is transmitted through gateway mobile switching centre (GMSC) 104, which gets the present location information of the receiving MS 101 from the HLR 103b. HLR 103b knows under which MSC the receiving device is and the message is transmitted to that MSC 103. The MSC 103 gets the present location information of the receiving MS 101 from the VLR 103a. VLR 103a knows under which radio access network the receiving device is and the message is transmitted to the radio access network (RAN) 102, which directs the message to the receiving MS 101.

Besides the mentioned GMSC 104, there are also parallel SMS-gateways (SMSG) 106, which typically connect service providers (SP) 107 to the SMS centre 105 (SMSC). There may also be more than one SMS centres. Since there are many SMS centre -protocols, SMS-gateways 106 typically support many of these protocols. SMS services 107 are typically servers in the net and these servers respond to the queries according to the pre-set rules or varying conditions. One example is a weather service, which answers to the query "temperature Helsinki" submitted as an SMS-message. The weather service replies by sending an answer message to the sender. The answer in this case includes the current temperature in Helsinki.

There are many standardized protocols of how to connect the Internet services to the SMS-gateways. In addition there are many non-standard protocols. For the providers of the SMS-services, this is a major difficulty. The SMS-gateways are used to overcome this problem and to interconnect several SMS-services into the several SMS centres.

The SMS-messages have got variable delays, limited size, low rate and low priority, because the signalling channels are used for transmitting the messages. A paging channel (PCH) is used for SMS broadcasting. Paging channel (PCH) is one of GSM common control channels (CCCH). Despite of these limitations the SMS-messages are commonly used.

Messages are transmitted within the same cell or to anyone with a roaming service capability. Messages may be sent from one digital phone to another or from a web site equipped with a PC link.

The SMS do not require a receiving mobile phone to be active or within range at the moment. The sent message will be held for a number of days in SMS-centre, until the receiving mobile phone is active and within range. If the receiving device cannot be reached within a predetermined time, the message will be destroyed.

Typically SMS-messages are used to give the mobile device user some information or notification. Most commonly an SMS-message notifies a mobile device owner that he or she has received voicemail message. SMS-messages can also inform salesperson of an inquiry and contact to a call. A doctor or a nurse can be notified with an SMS message if there is a patient with a problem requiring immediate care. A service person may get the time and the place of his/her next call and a driver may get the address of the next pickup through SMS-messaging. Also SMS is already used for a direct marketing and entertainment, such as SMS-games.

The technology of the SMS-messaging is evolving and the knowledge on SMS based systems is increasing rapidly. It is already possible to deliver binary formatted applications in the messages. There are also free SMS-message submission applications available in the Internet. This eases the submission of all kinds of SMS-messages. So the SMS is widely used and new targets of usage are evoked continuously. As the technology improves more and more usage areas are covered. This unavoidably leads to the situation, in which users will receive unpleasant messages. These unpleasant, unwanted messages may be sent intentionally or unintentionally.

SMS messages may be disturbing since the resources in the receiving capacity are limited. There is a maximum limit for the number of storable SMS-messages in each device. If the amount of received messages becomes large, some low importance messages, for example advertisement, fill the storage space. Also, depending on each user and their personal opinions, the content of a message may be intruding. Malfunctioning service software may submit unintended messages. For example receiving same message number of times can be annoying, especially when the message is received on inappropriate time.

Disturbing messages can also be sent intentionally. For example someone may intrude to a system of a wireless SMS-message provider and submit disturbing messages to the customers of that service. If there are too many messages arriving to one device with limited resources, all excess messages stay in the pool of the SMS-centre of the SMS-gateway. As soon as user deletes messages from his/her device, new messages are loaded from the pool of the SMS-centre. It is also possible to submit disturbing over the air (OTA) applications to SIM (subscriber identity module) cards of mobile devices.

Clearly disturbing are the virus-messages. As computers have their own anti-virus software, also with other devices virus-messages should be handled carefully. These messages should be, after identified, removed from the message streams. Further some alarm system should be activated.

WO 01/3955 relates to filtering electronic information. Therein a specific filtering parameter is attached to the electronic information and a terminal is informed of the filtering parameter before the electronic information is transferred to the terminal. The terminal then checks the filtering parameter and decides on the basis of that whether to allow the electronic information to be transferred to the terminal or not.

US 5,822,700 relates to a procedure, wherein a maximum permitted short message service message length for control channel transmission is identified. Short message service messages with lengths less than the maximum are authorized and messages having length exceeding the maximum are refused authorization for control channel transmission.

The objective of the present invention is to process SMS- and corresponding messages. The further objective of the present invention is to identify and control SMS-and corresponding messages in specific manner.

The objectives of the present invention are achieved by allowing certain parties to define the importance of different messages and by defining instructions for processing the messages according to their importance.

The invention is directed towards the characters, which are illustrated in the independent claims. The advantageous embodiments of the present invention are described in the depending claims.

In the following descriptions messages are commonly called SMS-messages for clarification. Also gateways, message centres and other affiliated means, methods and components are described as part of an SMS-messaging system. It is obvious that the described embodiments of the present invention are applicable also for other kind of messages, especially for MMS (multimedia messaging service)-messages.

To make the controlling, filtering and directing of SMS-messages possible, messages must be classified. The classification can be done by the user or by some administrator and it is done for example on a web site, which is attached to the SMS-gateway. According to an advantageous embodiment of the present invention the classification and processing rules are defined with a special programming tool generated for this purpose. According to other embodiment the known programming tools, like editors, and techniques can be used to produce the classification and processing rules. So it is assumed, that user has his/her own user tool and some connection to an SMS-gateway through a network. The actual programming tool is typically situated in an SMS-gateway or in a code server of the administrator.

The classification is based on some characteristics of messages. The classification can be based for example on sender, length, date, time, price or number of messages. Also a location of a sender can be the criteria of the classification. The classification can also be based on a content of the message, which can be traced by comparing for example matching words or bit patterns. The type of the message is as well one possible basis tor the classification. The message can be plain text, sound, picture, data accepted by MMS (multimedia messaging service), some OTA (on the air) application or any combination of mentioned.

The classification affects the routing of the SMS-message. According to prior art all messages were transmitted directly to the mobile device. According to the present invention directly to the mobile device can be transmitted for example the messages, which are classified important and urgent. Important, but not urgent messages can be directed to users mailbox. And finally not important or completely filtered messages can be viewed through the Internet or the service can only send a summary of the filtered messages by an email to users mailbox. The present invention allows also the recording of the whole messaging. The receiving device of the user will be available to accept important messages, since disturbing messages will not overload the device.

In the following description or the various embodiments, reference is made to the accompanying drawings, which form a part hereof, and in which is shown by way of illustration various embodiments in which the invention may be practised. It is to be understood that other embodiments may be utilized, and structural and functional modifications may be made without departing from the scope of the present invention.
- Figure 1: illustrates typical routes of an SMS-message according to prior art,
- Figure 2: illustrates a route of an SMS-message between mobile terminal and a service provider according to one advantageous embodiment of the present invention,
- Figure 3: illustrates the apparatus used for an advantageous embodiment of the present invention,
- Figure 4a: illustrates the internal messages exchanged during the SMS-message submission according to one advantageous embodiment of the present invention,
- Figure 4b: illustrates the processing step according to one advantageous embodiment of the present invention, and
- Figure 5: illustrates an processing of a message according to one advantageous embodiment of the present invention.

A simplified block diagram of an advantageous embodiment of the present invention is illustrated in figure 2. The messaging centre, used in the method according to the present invention, can be for example the SMS centre 202, as illustrated in figure 2. The service provider 205 is connected to the SMS centre 202 through an SMS-gateway 203. The used messaging gateway 203 can be for example the First Hop Message Gateway (FHMG), which is illustrated in the priority date of this application at the site http://www.firsthop.com/. The mobile terminal 201 is connected to the SMS centre 202 in some known way, for example like illustrated in detail in the prior art figure 1. In this application all kind of gateways that belong in the scope of the present invention are generally called SMS-gateways.

According to prior art an SMS-gateway 203 typically directs the messages to predefined network or receiver, depending on formerly defined instructions. According to advantageous embodiment of the present invention, the SMS-message is processed in an SMS-gateway 203 according to instructions 204 defined by one or more authorized party 204a. This author 204a maintaining the processing instructions 204 can be for example user, operator or some representative of a user group or a company. These processing instructions 204 may include for example new routing for some kind of messages, blocking of numbers or saving or certain messages.

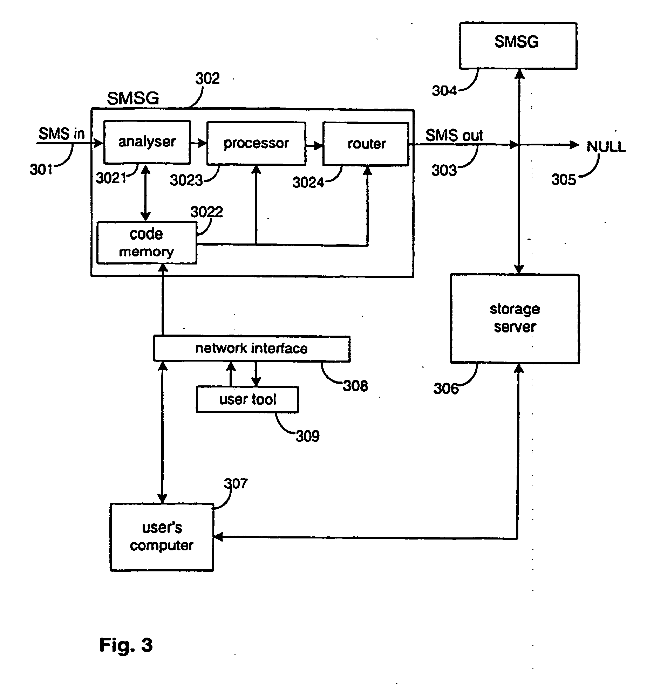

Figure 3 illustrates the SMS-gateway in more detail. The SMS-message 301 comes in to the SMS-gateway 302. In the SMS-gateway 302 the incoming message 301 first goes to an analyser 3021, which analyses the message 301 in predetermined way. This analysing is based on certain characters or properties of the incoming message 301, for example on the phone number. If there are defined some processing codes for the incoming message 301, the analyser 3021 identifies the message and informs the code memory 3022, which transmits certain valid instructions to the processor 3023 and to the router 3024. Based on code memory's 3022 instructions the processor 3023 processes the incoming message 301. For the pertinent redirecting of the message 30l the SMS-gateway includes a router 3024, which transmits the SMS-message out 303 from the SMS-gateway, towards its destination.

A number of SMS-gateways can be interconnected, for example through the Internet, forming large SMS-gateway-networks. Messages may be delivered to other messaging gateways or to some other SMS-gateway 304, as illustrated in figure 3. The message can be redirected for example to other service provider or mobile terminal; to other SMS-gateway or SMS-centre; to other access gateways or messaging systems. The receiver can be defined in a specified address-field, from which a router 3024 knows, where to transmit the message. Il the message is to be treated as an email, the SMS-gateway should be connected to some server using, for example SMTP (Simple Mail Transfer Protocol) or some other email protocol. The SMS-message may also be deleted 305 or stored in some storage server 306 for the future use. From the storage server 306 the messages may be transmitted, for example towards the MS, through some adequate gateway 304, for example after a predetermined time. Also the stored messages or the announcement of those may be transmitted to user's computer 307.

The user's computer 307, illustrated in figure 3, may as well be some other author's computer or terminal. The codes according to advantageous embodiment of the present invention are maintained through this terminal. For to edit and define the instructions and codes there also must be some network interface 308, which is attached to the code memory 3022 and to the analyser 3021. The attachment to the analyser 3021 may be implemented straight from the network interfaces 308 or the connection may be implemented through the code memory 3022, as illustrated in figure 3.

Further there is illustrated a user tool 309, which makes it possible and easy to generate the processing code. Advantageously with a user tool 309 the user can establish a connection with some programming tool, which can be for example a special programming tool generated for this purpose or some known programming tool. This programming tool is typically situated in an SMS-gateway or in some code server of an administrator, such as an operator. With this programming tool user can define for example number groups, from which the messages should not be directed to the phone and other numbers, which should be responded, or type of messages, which should be destroyed, or length of messages, which should be saved to some other device.

The system administrator is capable of programming his/her own code and some other author may be able to program his. Every authorized party has a programming tool or a user tool 309, which can establish a connection to a programming tool, to define one's own application code. According to an advantageous embodiment of the present invention the user tool 309 is simply some typical network browser and the connection to the programming tool is established through the Internet. Typically programming tool is used through a browser. The used browser can be wireless or wired. The user interface can be for example a web site. The user tool is implemented so, that it produces automatically bug free code.

The actual payload of an SMS-message, the user data, can be either in textual or in binary format. Although SMS-messages have a maximum length, the size of this user data is not limited. The SMS centre splits the messages and submits them in pieces. Some mobile terminals support this feature and concatenate the pieces of a message automatically.

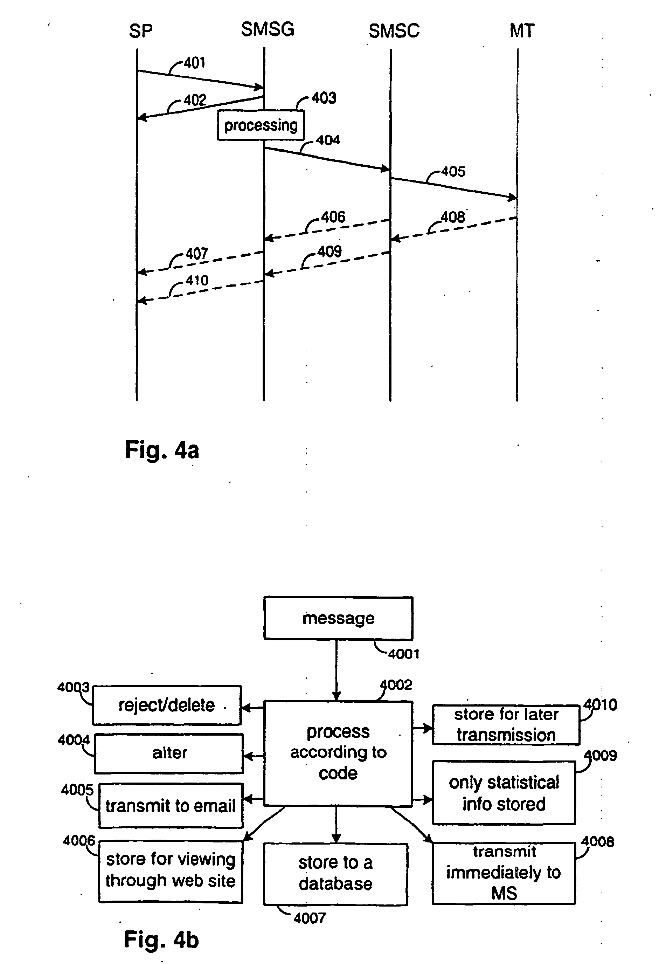

Also the general processing of a message is implemented in a gateway. According to an advantageous embodiment of the present invention the processing of a message is done based on the rules given through certain programming logics. According to this embodiment programmable codes may be either static or dynamic. Before contemplating these codes in detail, lets consider a situation that a service provider wants to send a message to the mobile terminal, which is illustrated in figure 4a.

The service provider sends a submit message to the SMS-gateway 401. This message 401 is a request to submit. Also the actual messages are encoded in one submit message and further it includes the instructions for transmitting the message. There is no upper limit for the length of the message operated in an SMS-gateway. SMS-gateway sends an acknowledgement back to the service provider 402. This acknowledgement includes a unique identification number of the message. After receiving the initial message from the service provider the SMS-gateway processes 403 the message. This processing advantageously includes the using of the predetermined codes according to an advantageous embodiment of the present invention. This processing step 403 is described further with the accompanying figure 4b later in this application.

After the message is processed 403, in figure 4a, SMS-gateway sends the message to the SMS centre 404. The SMS centre forwards the message to the mobile terminal 405 in some known prior art way. SMS centre may also send an acknowledgement to the SMS-gateway 406, which forwards the acknowledgement to the service provider 407. This acknowledgement informs about a successful or an unsuccessful transmission of a message to the SMS centre 404. This acknowledgement is sent only, if requested in the initial submit message in step 401. This optional acknowledgement is illustrated in figure 4a by dashed lines as is also the other optional information, which is a delivery status 408, 409, 410. The SMS centre gets the delivery status from the mobile terminal 408. The received delivery status is sent by the SMS centre to the SMS-gateway 409, which forwards it to the service provider 410. From the delivery status the service provider knows whether the mobile terminal received the message. This delivery status can also be requested later, for example after a requested submission of scheduled messages, the service provider can query the submission status of the messages by sending a statusreport-request to the SMS-gateway. The mentioned two optional information messages are not supported by all SMS centres.

The processing step 403 in figure 4a is illustrated in more detail in figure 4b. According to an advantageous embodiment of the present invention there are predetermined codes 4002, which determine how the messages 4001 are to be processed. These codes may be for example pure assembler, compiled code or a code may be compiled after it has been loaded from the database. Also the codes may be some interpretable code, like Java or some scripting language. It is not essential for the present invention, which known source code is used. These application codes are run and the messages 4001 will be processed according to transactions defined by a code 4002. In these codes there is determined some way to classify messages. Based on that classifying the message will be processed, for example rejected or deleted 4003, altered 4004, directed to other media than the original receiver, e.g. an email 4005 or a web site 4006 or even to other SMS-gateway, saved to a database 4007, responded with certain logic or left untouched and directed to the target device 4008. It is also possible to store only the statistical information about the message 4009 or the message may be stored for a later transmission to certain terminal 4010 or service.

According to the present invention the codes, or in other words, the classifying and processing rules for the messages, can be maintained by different authors. For example the operator may want to control all the messages in the system or just some kind of messages or some phone numbers. Advantageously the mentioned operator specific code will filter all universally harmful messages, for example the known virus messages. All identified harmful messages are destroyed and only the operator gets a notification about all messages deleted from the system. The operator may also want to keep track of some messages or users, since in several countries operators are obliged for providing authorities possibility for tracking of the traffic of certain users. This action is called a legal interception Also the operator can have a chargeable service, where a customer can for example with web-based tool attached to an SMS-gateway configure his own data and limits.

Also there can be some company code maintained by a user's employer. The company code can be used for example to add some text, logos or contact information to the messages to be sent to certain receivers. According to one advantageous embodiment of the present invention the company code is attached to company's billing system for example so, that processing is based on prepaid bills and based on prepayments, the messages are sent to the primary destination or redirected. This kind of embodiment can allow the customers and the employees to make queries about the bills, their amounts, dates and so on.

According to one advantageous embodiment the codes concern a specific user group. One example of this is an athletic group, of which members want to receive results from some automatic service immediately.

In the phone number specific, personal application code there is typically number based classification. The messages originating from certain numbers are either wanted or unwanted and redirected according to that. This code may change often and rapidly depending on temporary circumstances.

Typically the route of messages directed to the phone goes through codes of operator, company, user group and finally personal. Messages originating from the phone may for example go through user group code and user's company code. So the used codes are not necessarily the same to both directions. Used codes may be for example downloaded from the database.

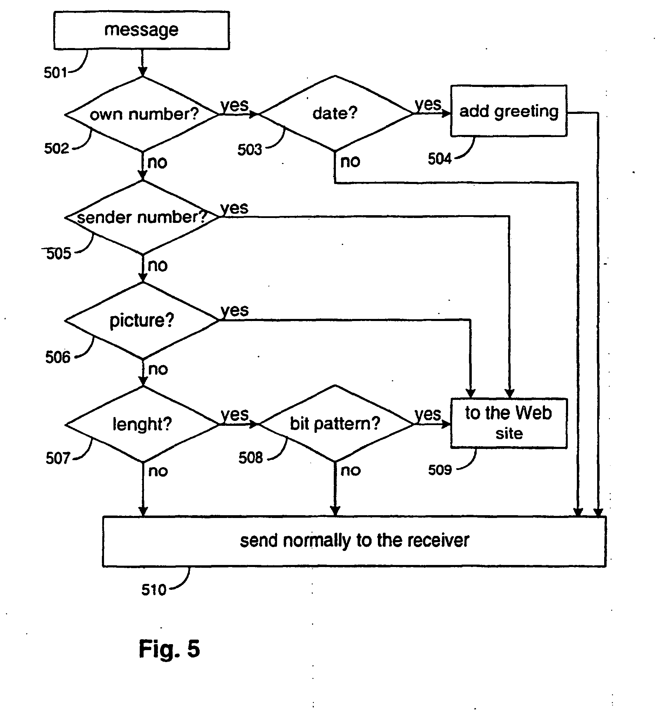

In figure 5 there is illustrated one exemplary embodiment of processing the messages. The code illustrated in figure 5 is bi-directional, so all messages originating from the mobile device or heading to the mobile device are processed in an SMS- gateway according to this code. So the message 501 arrives from the mobile device or from the SMS-centre to the SMS-gateway. First under the consideration is the phone number, from which the message 50 l is sent. If number is user's own number 502, next the date 503 is checked. If the date does not match to the predetermined one, the message is sent to the original receiver in usual way 510. If it is found out for example that the month of the date is December, Christmas greetings are added to the outgoing message, before it is transmitted to the receiver 510. Also in this step of this embodiment it is advantageous to confirm that there is sufficiently space in the message. This space checking is not illustrated in figure 5.

If the number of the sender was not this users phone number, this message is coming to this user. Next a list of numbers is checked 505 and if the match is found, the message is transmitted to the web site of the user 509. If the incoming message is not coming from the numbers that user wants to redirect to the web site, the next thing is to find out the type of the message 506. If the message is a picture or includes a picture 506, the message is transmitted to the web site 509. If the searched picture format is not found, next the length of the message is under consideration 507. Further, if the length 507 exceeds some predetermined value, some bit pattern 508 is looked for. This is done to direct all long messages 507 including a certain predetermined bit pattern 508 to the web site 509. Otherwise the message is transmitted normally to the receiver device 510.

As an example of the use of one advantageous embodiment of the present invention lets assume a travelling salesman, who wants to receive messages from his support organization during a business trip. On the other hand he does not want advertisements to load his mobile device, but he might want to browse them later on a better time. According to one advantageous embodiment of the present invention salesman configures at the service web site the settings as follows: messages from the support organization origin numbers and home numbers are directed straight, untouched to his mobile device and messages originating from other numbers he directs to his email. Afterwards salesman can log in to his web site and see all the messages transmitted to him during the trip.

One advantageous embodiment of the present invention is to configure an automatic answer to messages originating from certain numbers. There is a programming logic in the system, which may be used to develop applications conserving state for different numbers. An automatic answer can be used for example to make a messaging home page, which responds to the first coming message in some predetermined way, for example "I am in the airplane." The second message originating from the same number can be responded for example "I am still in the airplane." So in this embodiment of the present invention the numbers, from which the messages originate, are identified and accounted. The account configuration can be made through Internet or through an interface of a mobile device, like SMS or WAP (Wireless Application Protocol).

Another advantageous embodiment of the present invention is bi-directional, which means that the system is symmetric: messages originating from the service provider go through the same applications as messages originating from the user. This enables blocking off some undesired SMS-services. It can be determined that some numbers will not be reached at all, so line between two numbers is prevented. For example, parents might want to define, which SMS-services their children are allowed to use. This is typically implemented so that at first there is a limitation related to the phone bill and secondly parents allow their children to spend for example 10 FIM per week to certain SMS based services, such as games. Also company might want to hinder usage of some services, or apply some other limitations to employee's phones.

Usually user's telephone number or email address acts as an address of an SMS-message and is transmitted to the service provider. Sometimes users want to remain anonymous to the service, so transmission of user related data should be prevented. However the service needs a way to identity the user in a unique manner to receive requests and to send SMS-messages back to the requester. The identification of the user is also needed when the service includes charging the customer. If the SMS centre wants to provide anonymity for the users of the mobile terminals, it may transmit on an alphanumeric identifier to the service provider. This identifier is not related in any way to any user specific data. According to one advantageous embodiment of the present invention a component that can randomise the numbers is included in a message gateway. Every installation of a message gateway has a unique secret key that is set by the owner of the installation. The secret key is used as obfuscator to the phone numbers and it should change periodically. The advantageous embodiment is implemented by a random number, which is generated from system own random sources.

In order to achieve full anonymity, phone numbers are obfuscated with a two-way function, where the input consists of the phone number and a secret key. This function can consist of any symmetric key encryption/decryption algorithm.

If the service needs to identity the same user through long intervals the secret key cannot be changed for those services. This is the case for example, when the user has to register onto the service and is identified by the phone number. Further benefit of this embodiment of the anonymous service is that it makes impossible for the services to create user databases and sell them to third party service providers.

## Claims

1. A method for processing (403) messages in a gateway (302), **characterized in that** it comprises the steps of:
- classifying (502, 503, 505, 506, 507, 508) the messages based on their certain characteristics, and
- processing (403, 4002) the classified messages based on predetermined processing code that takes the classification into account,
wherein the step of processing (403, 4002) the classified messages comprises directing the messages further (4005, 4006, 4007, 4008, 4010) according to the processing code (204).

2. A method according to claim 1, **characterized in that** the messages are one of the following: SMS, short message service, and MMS, multimedia message service, messages.

3. A method according to claim 1, **characterized in that** it comprises maintaining a changeable state in said gateway, and wherein a way of processing the classified messages depends on the changeable state.

4. A method according to claim 1, **characterized in that** the codes for processing the messages are maintained on a web site.

5. A method according to claim 1, **characterized in that** it comprises the step of allowing at least one authorized party (204a) to customize a certain code for processing the messages.

6. A method according to claim 5, **characterized in that** it comprises the step of allowing at least one of the following to customize said certain code: an authorized operator, an authorized user, an authorized company, an authorized user group.

7. A method according to claim 1, **characterized in that** the classification (502, 503, 505, 506, 507, 508) is done based on a sender, location of a sender, type, price, content, length, date, time, amount of the message, or any combination of mentioned.

8. A method according to claim 1, **characterized in that** messages are processed (4002) in at least one of the following ways: deleted (4003), altered (4004), saved (4010), responded, left untouched or redirected (4005, 4006, 4007).

9. A method according to claim 1, **characterized in that** the step of processing (403, 4002) the messages comprises redirecting the messages through a certain messaging gateway to a certain device.

10. A method according to claim 1, **characterized in that** the step of processing the messages comprises routing the messages from one gateway (302) to another (304) in a gateway-network formed by certain gateways.

11. A method according to claim 1, **characterized in that** the processing (403, 4002) comprises the step of setting up limitations for the use of certain services.

12. A method according to claim 1, **characterized in that** the processing (403, 4002) comprises the step of retaining a user anonymous by forming an identifier for a user.

13. A method according to claim 1, **characterized in that** it comprises the steps of:
- establishing a network browser connection (308) between a computer of a user (307) and a code server (3022) administered by an operator, and
- as a response to commands given by said user through said network browser connection (308), modifying a part of certain code, which controls the processing (403, 4002) of messages destined to said user and is included in said code server (3022).

14. A control apparatus for processing messages in a gateway, **characterized in that** it comprises
- means for classifying (3021) the messages based on their certain characteristics, and
- means for processing (3023) the classified messages based on predetermined processing code (3022) that takes the classification into account,
wherein the means for processing the classified messages comprises means for directing (3024) the messages further according to the processing code.

15. A control apparatus according to claim 14, **characterized in that** the messages are one of the following: SMS, short message service, and MMS, multimedia message service, messages.

16. A control apparatus according to claim 14, **characterized in that** it is arranged to maintain a changeable state, and said means for processing (3023) are arranged to take the changeable state into account in processing the classified messages.

17. A control apparatus according to claim 14, **characterized in that** it comprises means for generating the processing code (308, 309) for processing messages.

18. A control apparatus according to claim 14, **characterized in that** it comprises a programming tool (309) be used for generating processing codes.

19. A control apparatus according to claim 18, **characterized in that** the programming tool (309) is arranged to be used with a wireless or a wired browser.

20. A control apparatus according to claim 14, **characterized in that** the processing codes (3022) reside in a gateway (302).

21. A control apparatus according to claim 14, **characterized in that** it comprises a computer device coupled to a general information network and arranged to set up and maintain a web site for defining the processing code.

22. A control apparatus according to claim 14, **characterized in that** it comprises a database for saving the processing codes (3022).

23. A control apparatus according to claim 14, **characterized in that** the processing code (3022) is one of following: assembler, compiled code, interpretable code or scripting language.

24. A control apparatus according to claim 14, **characterized in that** it comprises interconnected gateways (302, 304) forming a gateway-network.

## Patentansprüche

1. Verfahren zum Verarbeiten (403) von Nachrichten in einem Gateway (302), **dadurch gekennzeichnet, dass** es die folgenden Schritte umfasst:
- Klassifizieren (502, 503, 505, 506, 507, 508) der Nachrichten basierend auf deren bestimmten Merkmalen, und
- Verarbeiten (403, 4022) der klassifizierten Nachrichten basierend auf einem vorgegebenen Verarbeitungscode, der die Klassifizierung berücksichtigt,
wobei der Schritt des Verarbeitens (403, 4002) der klassifizierten Nachrichten das Weiterleiten der Nachrichten (4005, 4006, 4007, 4008, 4010) gemäß dem Verarbeitungscode (204) umfasst.

2. Verfahren nach Anspruch 1, **dadurch gekennzeichnet, dass** die Nachrichten von einer der folgenden Arten sind: SMS-, short message service, und MMS-, multimedia message service, Nachrichten.

3. Verfahren nach Anspruch 1, **dadurch gekennzeichnet, dass** es das Aufrechterhalten eines veränderlichen Zustands in dem Gateway umfasst, und bei dem eine Verarbeitungsweise der klassifizierten Nachrichten von dem veränderlichen Zustand abhängt

4. Verfahren nach Anspruch 1, **dadurch gekennzeichnet, dass** die Codes für das Verarbeiten der Nachrichten auf einer Website unterhalten werden.

5. Verfahren nach Anspruch 1, **dadurch gekennzeichnet, dass** es den Schritt des Zulassens von zumindest einer autorisierten Partei (204a) zum Anpassen eines bestimmten Codes für das Verarbeiten der Nachrichten umfasst.

6. Verfahren nach Anspruch 5, **dadurch gekennzeichnet, dass** es den Schritt des Zulassens von zumindest einem der folgenden zum Anpassen des bestimmten Codes umfasst: einen autorisierten Betreiber, einen autorisierten Benutzer, ein autorisiertes Unternehmen und eine autorisierte Benutzergruppe.

7. Verfahren nach Anspruch 1, **dadurch gekennzeichnet, dass** die Klassifizierung (502, 503, 505, 506, 507, 508) basierend auf einem Sender, einem Standort eines Senders, einem Typ, einem Preis, einem Inhalt, einer Länge, eines Datums, einer Zeit, einer Größe der Nachricht oder einer Kombination des Erwähnten durchgeführt wird.

8. Verfahren nach Anspruch 1, **dadurch gekennzeichnet, dass** Nachrichten auf zumindest eine der folgenden Arten verarbeitet (4002) werden: gelöscht (4003), geändert (4004), gespeichert (4010), beantwortet, unberührt gelassen oder umgeleitet (4005, 4006, 4007).

9. Verfahren nach Anspruch 1, **dadurch gekennzeichnet, dass** der Schritt des Verarbeitens (403, 4002) der Nachrichten das Umleiten der Nachrichten durch ein bestimmtes Nachrichten-Gateway an eine bestimmte Vorrichtung umfasst.

10. Verfahren nach Anspruch 1, **dadurch gekennzeichnet, dass** der Schritt des Verarbeitens der Nachrichten das Routen der Nachrichten von einem Gateway (302) zu einem anderen (304) in einem Gateway-Netzwerk umfasst, das aus bestimmten Gateways gebildet wird.

11. Verfahren nach Anspruch 1, **dadurch gekennzeichnet, dass** das Verarbeiten (403, 4022) den Schritt des Festsetzens von Beschränkungen für die Nutzung bestimmter Dienste umfasst.

12. Verfahren nach Anspruch 1, **dadurch gekennzeichnet, dass** das Verarbeiten (403, 4002) den Schritt des Anonymhaltens eines Benutzers durch Bilden eines Identifikators für einen Benutzer umfasst.

13. Verfahren nach Anspruch 1, **dadurch gekennzeichnet, dass** es die folgenden Schritte umfasst:
- Aufbauen einer Netzwerkbrowserverbindung (308) zwischen einem Computer eines Benutzers (307) und einem Code-Server (3022), der von einem Betreiber administriert wird; und
- als Antwort auf Befehle, die von dem Benutzer über die Netzwerkbrowserverbindung (308) gegeben werden, Modifizieren eines Teils eines bestimmten Codes, der das Verarbeiten (403, 4002) von Nachrichten, die an den Benutzer gerichtet sind, bestimmt und der in dem Code-Server (3022) beinhaltet ist.

14. Steuervorrichtung zum Verarbeiten von Nachrichten in einem Gateway, **dadurch gekennzeichnet, dass** sie umfasst:
- Mittel zum Klassifizieren (3021) der Nachrichten, basierend auf deren bestimmten Merkmalen, und
- Mittel zum Verarbeiten (3023) der klassifizierten Nachrichten basierend auf einem vorgegebenen Verarbeitungscode (3022), der die Klassifizierung berücksichtigt,
wobei das Mittel zum Verarbeiten der klassifizierten Nachrichten Mittel zum Weiterleiten (3024) der Nachrichten gemäß dem Verarbeitungscode umfasst.

15. Steuervorrichtung nach Anspruch 14, **dadurch gekennzeichnet, dass** die Nachrichten von einer der folgenden Arten sind: SMS-, short message service, und MMS-, multimedia message service, Nachrichten.

16. Steuervorrichtung nach Anspruch 14, **dadurch gekennzeichnet, dass** diese dazu eingerichtet ist, einen veränderlichen Zustand aufrechtzuerhalten, und die Mittel zum Verarbeiten (3023) dazu eingerichtet sind, den veränderlichen Zustand beim Verarbeiten der klassifizierten Nachrichten zu berücksichtigen.

17. Steuervorrichtung nach Anspruch 14, **dadurch gekennzeichnet, dass** diese weiterhin Mittel zum Erzeugen des Verarbeitungscodes (308, 309) für das Verarbeiten von Nachrichten umfasst.

18. Steuervorrichtung nach Anspruch 14, **dadurch gekennzeichnet, dass** diese ein für das Erzeugen der Verarbeitungscodes zu verwendendes Programmierwerkzeug (309) umfasst.

19. Steuervorrichtung nach Anspruch 18, **dadurch gekennzeichnet, dass** das Programmierwerkzeug (309) dazu eingerichtet ist, von einem Benutzer mit einem drahtlosen oder drahtgebundenem Browser verwendet zu werden.

20. Steuervorrichtung nach Anspruch 14, **dadurch gekennzeichnet, dass** die Verarbeitungscodes (3022) in einem Gateway (302) liegen.

21. Steuervorrichtung nach Anspruch 14, **dadurch gekennzeichnet, dass** diese eine Computervorrichtung umfasst, die mit einem allgemeinen Informationsnetzwerk verbunden ist und dazu eingerichtet ist, eine Website zum Definieren des Verarbeitungscodes aufzubauen und aufrechtzuerhalten.

22. Steuervorrichtung nach Anspruch 14, **dadurch gekennzeichnet, dass** diese eine Datenbank zum Speichern der Verarbeitungscodes (3022) enthält.

23. Steuervorrichtung nach Anspruch 14, **dadurch gekennzeichnet, dass** der Verarbeitungscode (3022) von einer der folgenden Arten ist: Assembler, kompilierter Code, interpretierbarer Code oder Skriptsprache.

24. Steuervorrichtung nach Anspruch 14, **dadurch gekennzeichnet, dass** diese miteinander verbundene Gateways (302, 304) zur Bildung eines Gateway-Netzwerks umfasst.

## Revendications

1. Procédé de traitement (403) de messages dans une passerelle (302), **caractérisé en ce qu'**il comprend les étapes de :
- classification (502, 503, 505, 506, 507, 508) des messages sur la base de caractéristiques propres à ces messages, et
- traitement (403, 4002) des messages classifiés sur la base d'un code de traitement prédéterminé qui prend en compte la classification,
dans lequel l'étape de traitement (403, 4002) des messages classifiés comprend le fait de gérer subséquemment les messages (4005, 4006, 4007, 4008, 4010) en fonction du code de traitement (204).

2. Procédé selon la revendication 1, **caractérisé en ce que** les messages sont de l'un des types parmi les suivants : des messages dits SMS, service de messages succincts, ou des messages dits MMS, service de message multimédia.

3. Procédé selon la revendication 1, **caractérisé en ce qu'**il comprend le fait de maintenir un état variable dans ladite passerelle, et dans lequel une méthode de traitement des messages classifiés dépend de l'état variable.

4. Procédé selon la revendication 1, **caractérisé en ce que** les codes pour le traitement des messages sont conservés sur un site Web.

5. Procédé selon la revendication 1, **caractérisé en ce qu'**il comprend l'étape consistant à permettre à au moins une partie autorisée (204a) de personnaliser un code donné pour le traitement des messages.

6. Procédé selon la revendication 5, **caractérisé en ce qu'**il comprend l'étape consistant à permettre à au moins une des personnes parmi les suivantes de personnaliser ledit code donné : un opérateur autorisé, un utilisateur autorisé, une société autorisée, un groupe d'utilisateurs autorisés.

7. Procédé selon la revendication 1, **caractérisé en ce que** la classification (502, 503, 505, 506, 507, 508) est réalisée sur la base d'un expéditeur, de l'emplacement d'un expéditeur, d'un type, d'un prix, d'un contenu, d'une longueur, d'une date, d'un temps, d'une quantité de message, ou sur l'une quelconque des combinaisons de ces éléments.

8. Procédé selon la revendication 1, **caractérisé en ce que** les messages sont traités (4002) de l'une au moins des façons suivantes : les supprimer (4003), les modifier (4004), les sauvegarder (4010), y répondre, les marquer comme non lus ou les rediriger (4005, 4006, 4007).

9. Procédé selon la revendication 1, **caractérisé en ce que** l'étape de traitement (403, 4002) des messages comprend la redirection des messages par l'intermédiaire d'une passerelle donnée de transmission de messages à un dispositif donné.

10. Procédé selon la revendication 1, **caractérisé en ce que** l'étape de traitement des messages comprend le routage des messages d'une passerelle (302) à l'autre (304) dans un réseau de passerelles constitué par des passerelles données.

11. Procédé selon la revendication 1, **caractérisé en ce que** l'étape de traitement (403, 4002) comprend l'étape d'établissement de limitations pour l'utilisation de services donnés.

12. Procédé selon la revendication 1, **caractérisé en ce que** l'étape de traitement (403, 4002) comprend l'étape consistant à conserver un utilisateur anonyme en créant un identifiant pour un utilisateur.

13. Procédé selon la revendication 1, **caractérisé en ce qu'**il comprend les étapes :
- d'établissement d'une connexion à un navigateur réseau (308) entre un ordinateur d'un utilisateur (307) et un serveur de code (3022) administré par un opérateur, et
- de modification d'une partie du code donné qui commande le traitement (403, 4002) des messages destinés audit utilisateur et qui est inclus dans ledit serveur de code (3022), comme une réponse aux instructions définies par ledit utilisateur par l'intermédiaire de ladite connexion à un navigateur réseau (308).

14. Appareil de commande pour le traitement des messages dans une passerelle, **caractérisé en ce qu'**il comprend
- des moyens pour la classification (3021) des messages sur la base de caractéristiques propres à ces messages, et
- des moyens pour le traitement (3023) des messages classifiés sur la base d'un code de traitement prédéterminé (3022) qui prend en compte la classification,
dans lequel les moyens pour le traitement des messages classifiés comprennent des moyens de gestion complémentaire (3024) des messages selon le code de traitement.

15. Appareil de commande selon la revendication 14, **caractérisé en ce que** les messages sont de l'un des types parmi les suivants : des messages dits SMS, service de messages succincts, ou des messages dits MMS, service de message multimédia.

16. Appareil de commande selon la revendication 14, **caractérisé en ce qu'**il est agencé pour maintenir un état variable, et lesdits moyens de traitement (3023) sont agencés pour prendre en compte l'état variable dans le traitement des messages classifiés.

17. Appareil de commande selon la revendication 14 **caractérisé en ce qu'**il comprend des moyens pour générer le code de traitement (308, 309) destiné au traitement des messages.

18. Appareil de commande selon la revendication 14, **caractérisé en ce qu'**il comprend un outil de programmation (309) utilisé pour générer les codes de traitement.

19. Appareil de commande selon la revendication 18, **caractérisé en ce que** l'outil de programmation (309) est agencé pour être utilisé avec un navigateur câblé ou sans fil.

20. Appareil de commande selon la revendication 14, **caractérisé en ce que** les codes de traitement (3022) résident dans une passerelle (302).

21. Appareil de commande selon la revendication 14, **caractérisé en ce qu'**il comprend un dispositif d'ordinateur relié à un réseau général d'informations et agencé pour établir et entretenir un site Web destiné à définir le code de traitement.

22. Appareil de commande selon la revendication 14, **caractérisé en ce qu'**il comprend une banque de données pour sauvegarder les codes de traitement (3022).

23. Appareil de commande selon la revendication 14, **caractérisé en ce que** le code de traitement (3022) est d'un type choisi parmi les suivants : un assembleur, un code compilé, un code interprétable ou un langage de script.

24. Appareil de commande selon la revendication 14, **caractérisé en ce qu'**il comprend des passerelles interconnectées (302, 304) formant un réseau de passerelles.
